# FASCICULE DE BREVET EUROPEEN

(11) **EP 2 351 136 B1**
(45) Date de publication et mention de la délivrance du brevet: **02.01.2013**
(21) Numéro de dépôt: 09740895.9
(22) Date de dépôt: 28.10.2009
(51) Int. Cl.: H01M 8/12, H01M 8/10, C25B 13/00

(54) **ELECTROLYTE A RIGIDITÉ ABAISSÉE, ET SYSTEME ELECTROCHIMIQUE COMPORTANT UN TEL ÉLECTROLYTE**
ELEKTROLYT MIT VERRINGERTER STARRE UND ELEKTROCHEMISCHES SYSTEM MIT EINEM SOLCHEN ELEKTROLYT
ELECTROLYTE WITH REDUCED RIGIDITY, AND ELECTROCHEMICAL SYSTEM INCLUDING SUCH AN ELECTROLYTE

(30) Priorité: 30.10.2008 FR 0857407
(43) Date de publication de la demande: 03.08.2011
(73) Titulaire: Commissariat à l'Energie Atomique, 75015 Paris (FR)
(72) Inventeur: DI IORIO, Stéphane, F-38250 Lans-en-vercors (FR); DELAHAYE, Thibaud, F-30330 Tresques (FR)
(74) Mandataire: Ilgart, Jean-Christophe
(86) Numéro de dépôt international: PCT/EP2009/064194
(87) Numéro de publication internationale: WO 2010/049443

(56) Documents cités:
- WO-A-02/069413
- FR-A- 2 306 540
- US-A1- 2002 012 825

## Description

### DOMAINE TECHNIQUE ET ART ANTÉRIEUR

La présente invention se rapporte à un électrolyte à rigidité abaissée pour piles à combustibles et pour électrolyseurs, plus particulièrement pour les piles à combustibles à haute température, type SOFC (« Solid oxide fuel cell ») et pour les électrolyseurs haute température (EHT).

Un système électrochimique, tel qu'une pile à combustible ou un électrolyseur comprend un empilement de cellules, chaque cellule comportant une anode, une cathode et un électrolyte solide interposé entre l'anode et la cathode. L'électrolyte est en matériau céramique.

La durée de vie d'une pile à combustible haute température ou d'un électrolyseur haute température est conditionnée, notamment, par la tenue mécanique de chaque cellule, et plus particulièrement par la tenue mécanique de l'électrolyte, dans le cas des cellules à électrolyte support.

Or, les cellules sont soumises à des chargements mécaniques, à la fabrication et lors du fonctionnement du système électrochimique. Afin d'obtenir un bon contact électrique entre les différentes couches de l'empilement, un chargement mécanique est appliqué à l'empilement selon son axe, lors de l'assemblage du système électrochimique. Ce chargement mécanique peut être obtenu en appliquant un déplacement prédéterminé. Plus la rigidité de la cellule est importante, plus ces déplacements génèrent des contraintes importantes. Si ces contraintes sont trop élevées, elles peuvent provoquer une rupture de la cellule. Par ailleurs, le fonctionnement à haute température sollicite fortement les différentes couches. L'endommagement des différentes couches peut diminuer les performances du système électrochimique, voire empêcher complètement sous fonctionnement.

Dans le cas d'un déplacement imposé, une solution possible pour réduire les risques d'endommagement est de diminuer l'épaisseur des couches formant les cellules, notamment celle de l'électrolyte, ce qui a pour effet de réduire la rigidité de la cellule et donc les contraintes générées sur la cellule. Cependant, une diminution d'épaisseur est difficile à réaliser techniquement, et ne permets pas d'adapter finement la rigidité de la cellule aux sollicitations qu'elle subit.

Le document US 7 045 234 décrit un électrolyte en céramique comportant des bosses ou des pointes sur ses deux faces destinées à recevoir les électrodes. Cependant, ces bosses ou pointes n'ont aucun effet, sur la rigidité de l'électrolyte. Le document WO 02/069413 décrit un élément de pile à combustible de type SOFC comportant une anode, une cathode et une plaque d'électrolyte interposée entre l'anode et la cathode. La plaque d'électrolyte comporte sur une face, des protubérances à section rectangulaire formant sur la face opposée des creux à section rectangulaire, l'épaisseur de matière de l'électrolyte est très inférieure à la hauteur et à la profondeur des protubérances et des creux respectivement. Ce type de plaque est fragile et présente une durée de vie réduite. Les documents US 2002/012825 A1 et FR-A-2 306 540 présentent également une plaque d'électrolyte pour système electrochimique.

C'est par conséquent un but de la présente invention, d'offrir un électrolyte solide offrant une rigidité abaissée sans variation de son épaisseur, ou plus généralement d'offrir un système électrochimique à durée de vie augmentée.

### EXPOSÉ DE L'INVENTION

Le but précédemment énoncé est atteint par une plaque d'électrolyte, selon la revendication 1, en matériau céramique pour pile à combustible ou électrolyseur, comportant sur une des deux faces des bande en saillies en forme de lignes et sur l'autre face des bande en creux en forme de lignes, ces bandes étant pour chaque face parallèles entre elles. Cette structuration permet d'abaisser notablement la rigidité de l'électrolyte pour un chargement en déplacement imposé, et donc d'abaisser la rigidité de la cellule dans son ensemble. Cela permet de réduire les contraintes subies par la cellule, et éventuellement d'en contrôler la répartition. La durée de vie du système électrochimique composé de telles cellules est alors augmentée.

De manière avantageuse, l'axe de chaque bande en saillie est contenu dans un plan contenant l'axe d'une bande en creux, ledit plan état sensiblement orthogonal à un plan moyen de la plaque.

En d'autres termes, la plaque comporte des tranchées sur ses deux faces, parallèles entre elles dans chaque face . Avantageusement, vu en coupe, les tranchées d'une face sent disposées entre deux tranchées de l'autre face, de sorte que l'épaisseur de la plaque ainsi structurée reste sensiblement constante sur toute son étendue.

Il est avantageux de prévoir des saillies ayant une hauteur supérieure à 2, 5 µm, et des creux de même profondeur que la hauteur des saillies.

La présente invention a alors principalement pour objet une plaque d'électrolyte pour système électrochimique telle que décrit dans la revendication 1.

Dans un exemple de réalisation, la hauteur des saillies, la profondeur des creux et la distance entre la première et la deuxième face de la plaque sont égales.

Les saillies et les creux ont avantageusement des sections transversales de formés identiques, par exemple en forme de trapèze isocèle, et présentant des dimensions sensiblement égales.

Par exemple, la plaque d'électrolyte selon la présente invention a une épaisseur comprise entre 25 µm et 2 mm, avantageusement égale à 200 µm, les saillies présentant une hauteur comprise entre 5 µm et 1,5 mm, avantageusement égale à 200 µm, et les creux présentant une profondeur comprise entre 5 µm et 1,5 mm, avantageusement égale à 200 µm.

La présente invention a également pour objet un système électrochimique comportant au moins une cellule comprenant une plaque d'électrolyte selon la présente invention, une cathode sur l'une parmi la première et la deuxième face et une anode sur l'autre de ses faces.

Le système électrochimique peut comporter une pluralité de cellules invention connectées en série par des plaques interconnectrices disposées entre une anode d'une cellule et une cathode d'une cellule adjacente.

Le système électrochimique peut être une pile à combustible, par exemple haute température, de type SOFC, ou un électrolyseur, par exemple haute température.

La présente invention a régalement pour objet un procédé de fabrication d'une plaque selon la présente invention comportant :
- étape de coulage en bande,
- l'étape de réalisation des motifs sur la première et la deuxième face de la plaque, au moyen d'un dispositif laser dans une plaque,
- étape de frittage de la plaque,
- l'étape de réalisation des électrodes,
- l'étape de frittage des électrodes.

### BRÈVE DESCRIPTION DES DESSINS

La présente invention sera mieux comprise à l'aide de la description qui va suivre et dessins en annexe sur lesquels :
- la figure 1 est une vue en perspective d'un exemple de réalisation d'une plaque d'électrolyte selon la présente invention,
- la figures 2A est une vue en coupe selon le plan A-A de la plaque de la figure 1,
- la figure 2B est une vue en coupe d'une variante de réalisation d'un plaque selon la présente invention,
- les figures 3A et 3B représentent respectivement la répartition des contraintes sur une plaque sans relief et sur une plaque de la figure 1,
- la figure 4 est une vue en coupe longitudinale d'une pile comportant des plaques d'électrolyte de la figure 1 .

### EXPOSÉ DÉTAILLÉ DE MODES DE RÉALISATION PARTICULIERS

Les plaques d'électrolyte qui seront décrites ont une forme de parallélépipède rectangle, cependant il est bien entendu que des plaques ayant une forme de disque ou toute autre forme ne sort pas du cadre de la présente invention.

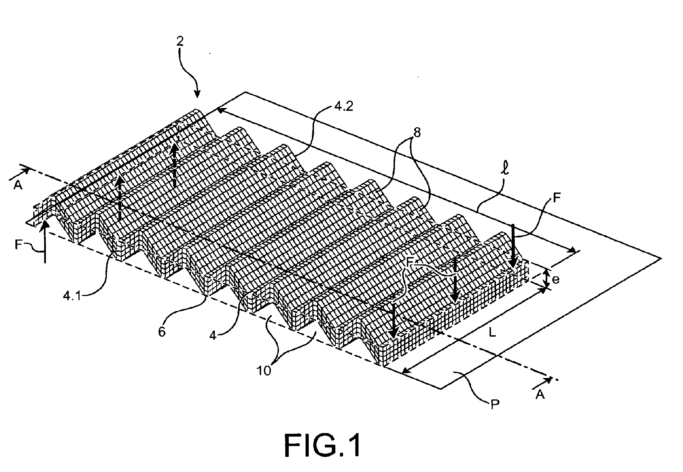

Sur la figure 1, on peut voir un premier exemple d'une plaque d'électrolyte 2 selon la présente invention, de plan moyen P.

La plaque 2 a la forme d'un parallélépipède rectangle présentant une épaisseur e très faible par rapport à sa largeur L et sa longueur 1. La plaque est réalisée en céramique.

La plaque présente une première face 4 et une deuxième face 6 de plus grande surface, opposées par rapport au plan moyen P. La première 4 et la deuxième 6 face sont séparées de la distance e.

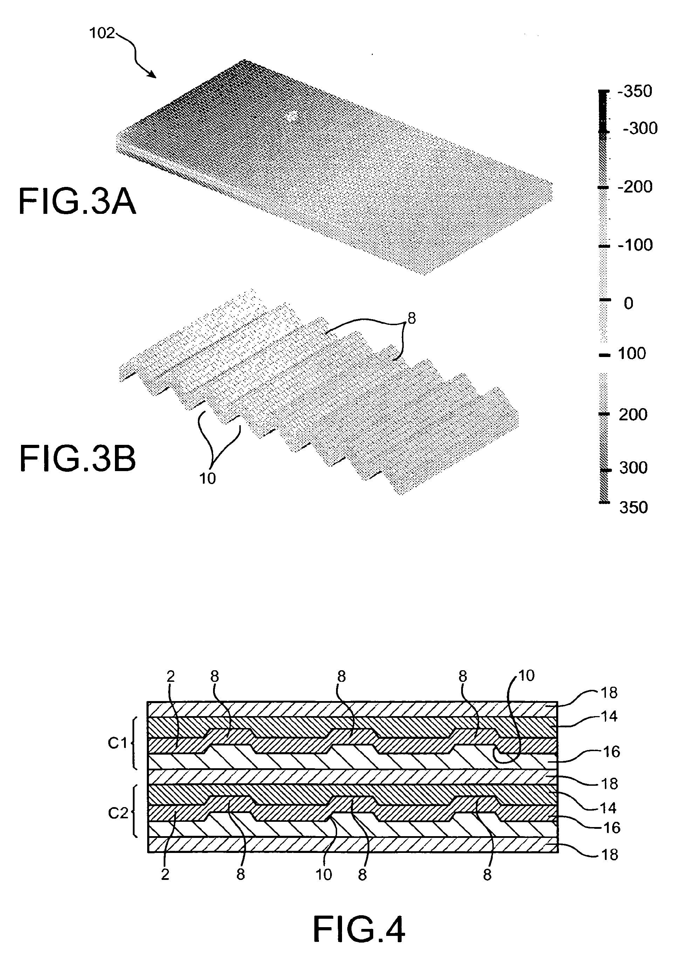

Ces deux faces 4, 6 sont destinées à être en regard pour l'une d'une anode, et pour l'autre d'une cathode (représentées sur la figure 4).

Selon la présente invention, la première face 4 comporte des saillies 8 sensiblement linéaires s'étendant d'un premier bord 4.1 à un deuxième bord 4.2 opposé au premier bord 4.1. Dans l'exemple représenté, les saillies s'étendent selon la largeur de la plaque. La deuxième face 6 comporte des creux 10 ou nervures linéaires parallèles, s'étendant également du premier bord 4.1 au deuxième bord 4.2.

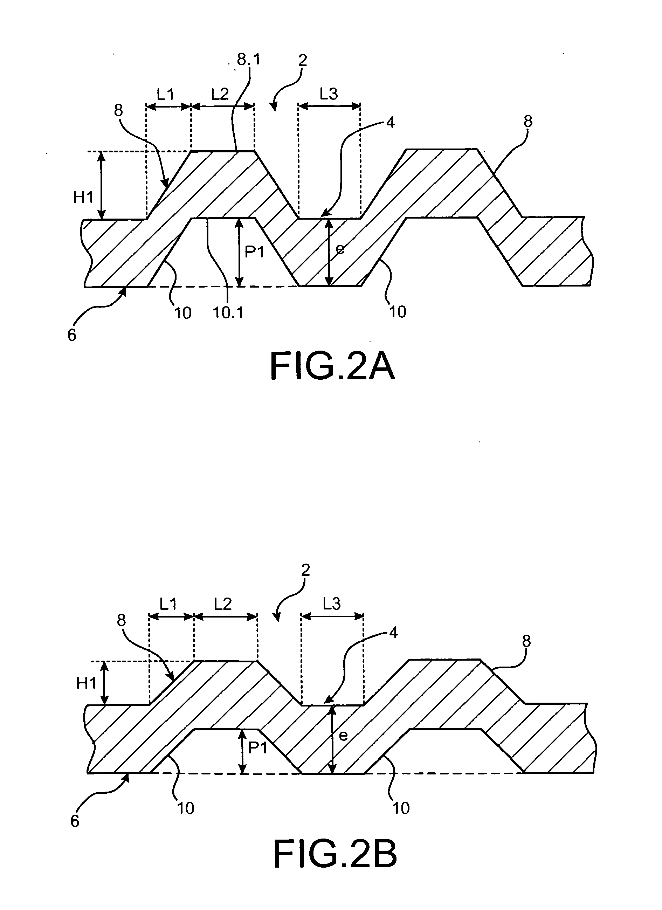

Les termes « saillies » et « creux » qualifient la structure en prenant comme référence la plaque d'épaisseur e, e étant représentée sur les figures 1, 2A et 2B. La plaque d'épaisseur e est représentée en pointillé sur la figure 2A. En effet, l'épaisseur e est une des caractéristiques de la plaque, celle-ci définissant la .résistance électronique de la plaque et donc les performances électrochimiques de la cellule.

Selon l'invention, chaque saillie 8 est superposée à un creux 10 selon la direction verticale. En outre, la hauteur de la saillie et la profondeur du creux superposés sont sensiblement égales. Par conséquent un fond 10.1 du creux et un sommet 8.1 de la saillie sont distants de e. La plaque a alors une épaisseur sensiblement constante.

On entend, dans la présente demande, par épaisseur sensiblement constante, une épaisseur dont les variations d'épaisseur de la plaque d'électrolyte n'excède pas 10% de son épaisseur moyenne et sont préférentiellement inférieur à 5%.

En outre selon la présente invention, la profondeur des creux et la hauteur des saillies sont inférieures ou égales à la distance (e) entre la première et la deuxième face.

Grâce au fait que la profondeur des creux et la hauteur des saillies sont inférieures ou égales à la distance e entre les deux faces de la plaque, les angles formés entre les saillies et les creux et les faces sont très ouverts, les concentrations de contrainte sont alors faibles, ce qui permet de ne pas diminuer la durée de vie de l'électrolyte.

Sur la figure 2A, on peut voir une vue en coupe selon le plan A-A de la plaque de la figue 1. Dans l'exemple, les saillies 8 ont une section en forme de trapèze isocèle, mais il est bien entendu qu'une saillie ayant une section trapézoïdale quelconque ou en demi-cercle ne sort pas du cadre de la présente invention.

Dans cet exemple de réalisation, la profondeur P1 des creux et la hauteur H1 des saillies sont égales à l'épaisseur e de la plaque. Comme nous le verrons par la suite, cette configuration présente une rigidité moindre par rapport à une configuration où la profondeur et la hauteur sont inférieures à l'épaisseur e, comme c'est le cas sur la figure 2B.

Dans l'exemple représenté, les creux ont également une section trapézoïdale.

Plus généralement, les saillies et les creux ont sensiblement les mêmes dimensions de telle sorte que l'épaisseur de toute la plaque est sensiblement constante. Ceci permet d'éviter une variation de la résistance électronique au sein de la plaque. La présence des creux et des saillies n'a alors que peu d'influence sur les performances électrochimiques de la plaque.

La section trapézoïdale d'une saillie a une hauteur H1, une petite base de longueur L2, une grande base de longueur L2 + 2L1.

La section trapézoïdale d'un creux a une profondeur P1 égale à H1, une petite base de longueur L2 et une grande base de longueur L2 + 2L1.

En outre, dans l'exemple représenté, les saillies sont réparties de manière régulière sur les faces 4, et les creux sur la face 6. La distance séparant deux bords de deux saillies adjacentes ou te deux creux adjacents est L3 et est constante sur toute la plaque.

Les saillies 8 ou les creux 10, et plus généralement le relief sur les deux faces 4, 6 ont pour effet de diminuer de manière significative la rigidité de la plaque d'électrolyte sans changer l'épaisseur de la plaque. En effet, la réduction de la rigidité de la plaque par diminution de son épaisseur est techniquement difficile à réaliser. Grâce à l'invention, on obtient une telle réduction sans avoir à abaisser cette épaisseur.

Grâce à l'invention, la plaque d'électrolyte offre une rigidité réduite tout en présentant une épaisseur ne variant sensiblement pas.

De plus, les reliefs peuvent être réalisés sur une partie limitée de la plaque, afin de réduire les contraintes présentes dans les zones les plus sensibles.

Sur la figure 2B, on peut voir une variante de réalisation de la plaque de la figure 1, dans laquelle la profondeur P1 des creux 10 est inférieure à l'épaisseur e de la plaque 2.

A titre d'illustration, afin de montrer l'efficacité de la présente invention, nous allons comparer la rigidité de plaques selon la présente invention à celle d'une plaque de base de forme parallélépipédique ayant deux faces opposées planes.

La rigidité d'un matériau se caractérise par la relation linéaire entre la contrainte a appliquée et la déformation élastique z résultant de cette contrainte. Le module de Young E correspond à la pente de cette droite.

Les résultats suivants ont été obtenus à partir d'une simulation numérique d'un essai de flexion 3 points sur des plaques ayant différentes configurations. Le déplacement est appliqué sur la face 8. Les contraintes appliquées sont symbolisées par les flèches F.

On considère une plaque de base ayant une épaisseur e = 0,2 mm, une largeur L = 2 mm et une longueur 1 - 4 mm. Cette plaque a un module d'Young E = 200 GPa.

**Tableau I : Résultats de simulation sur des plaques des figures 2A et 2B.**

| **L1 (mm)** | **L2 (mm)** | **L3 (mm)** | **H1 ou P1 (mm)** | **E_{equi} (GPa)** | **Variation** |
|---|---|---|---|---|---|
| 0,05 | 0,05 | 0,05 | 0,05 | 175 | -12.7 % |
| 0,1 | 0,1 | 0,1 | 0, 1 | 141 | -29.4 % |
| 0,2 | 0,2 | 0,2 | 0,2 | 126 | -37.2 % |
| 0,2 | 0,05 | 0,05 | 0,2 | 107 | -46.3 % |

Les simulations, dont les résultats sont rassemblés dans le tableau I ci-dessus, ont été effectuées sur une plaque dont la section est similaire à celle des figures 2A et 2B. Plus particulièrement, les deux premières lignes correspondent aux dimensions de plaques similaires à celles de la figure 2B, et les deux dernières lignes correspondent aux dimensions de plaques similaires à celles de la figure 2A.

La dernière colonie regroupe le rapport entre la rigidité de la plaque structurée (i.e. le module de Young équivalant) et la rigidité de la plaque non structurée (dont le module de Young = 200 GPa).

On constate que, grâce à la présence des motifs selon la présente invention, la rigidité diminue de manière important.

Plus particulièrement, on constate que plus la profondeur des creux et la hauteur des saillies sont élevées, plus la rigidité est réduite. Ceci correspond à une plaque similaire à la figure 2A.

La présente invention permet donc de réaliser des plaques plus souples tout en conservant une épaisseur constante.

Sur les figures 3A et 3B, sont représentées les répartitions des contraintes au sein d'un plaque de l' art antérieur 102 et au sein d'une plaque 2 de la figure 1 selon l'invention respectivement.

On constate que les valeurs maximales de contraintes sont abaissées grâce à la présente invention, et que leur répartition au sein de la plaque est modifiée.

A titre d'exemple, on peut donner les dimensions suivantes :

L'épaisseur e peut être comprise entre 25 µm et 2 mm, et de manière préférée peut être égale à 200 µm ; la hauteur H1 des saillies et la profondeur P1 des creux peut être comprise entre 5 µm et 1,5 mm, et de manière préférée peut être égale à 200 µm ; la dimension L1 peut être comprise entre 10 µm et 1 mm, et de manière préférée peut être égale à 200 µm ; la dimension L2 peut être comprise entre 10 µm et 1 mm, et de manière préférée peut être égale à 50 µm ; la dimension L3 peut être comprise entre 10 µm et 1 mm ,et de manière préférée peut être égale à 50 µm.

Le rapport entre L3 et L2 + 2L1 est par exemple comprise entre 0.05 et 33.3, et de préférence entre 0.1 et 1.

A titre d'exemple, la plaque d'électrolyte peut être en zircone yttriée (YSZ), l'électrode à oxygène peut être en chromite de lanthane dopé strontium (LSM), et l'électrode à hydrogène peut être un cermet de nickel/zircone yttriée (Ni-YSZ).

Le matériau de la plaque d'électrolyte peut également être du 8YSZ, 3YSZ, 10Sc5Z, 10Sc1CeSZ, 10Sc1A5Z, 10Sc1YSZ, 5YbSZ, BCY, BCZY, BCG, BZY; BCZG.

La conception de la forme de la plaque, notamment de la disposition, de la répartition et des dimensions du relief peut être obtenue par le calcul par éléments finis.

La plaque d'électrolyte peut être réalisée suivant les techniques connues, par exemple par coulage en bande. L'épaisseur de la plaque avant structuration tient compte du relief à effectuer. La structuration des faces de la planque est réalisée "à cru", par exemple au moyen d'un dispositif laser dont le tracé peut être programmé à l'aide d'un ordinateur. La puissance du faisceau devra être choisie pour creuser la surface de la plaque sans casser la cellule. Une première structuration est effectuée sur une première face, puis la plaque d'électrolyte est retournée pour permettre la structuration de l'autre face.

Dans cet exemple de procédé de réalisation, la réalisation des motifs est obtenue par enlèvement de matière. Des tranchées sont gravées dans chacune des faces.

On cherche à positionner très précisément la cellule pour obtenir une bonne structuration.

Les étapes suivant l'étape de structuration des deux faces sont celles d'un procédé classique de réalisation d'une cellule, notamment l'étape de frittage de la plaque d'électrolyte, puis l'étape de réalisation des électrodes, par exemple par sérigraphie, puis l'étape de frittage des électrodes.

L'invention n'implique donc pas une modification important du procédé de fabrication des cellules de l'état de la technique, puisqu'elle ne nécessite que l'ajout d'une seule étape : la structuration par faisceau laser.

Grâce à la présente invention, les performances mélaniques d'une cellule sont augmentées sans diminuer les performances électrochimiques de celles-ci. En conséquence, la réalisation de pile à combustible industrielle en est facilitée car le coeur de pile est plus performant. La durée de vie des piles à combustible est alors augmentée puisque le chargement mécanique sur le coeur de pile est plus adapté à ce que peuvent supporter les cellules.

Sur la figure 4, on peut voir un exemple de pile SOFC selon la présente invention comportant un empilement de cellules C1, C2 comportant chacune une plaque d'électrolyte structurée similaire à celle de la figure 1, une anode 14 et une cathode 16. Les cellules sont connectées en série par des plaques interconnectrices 18.

Un électrolyseur selon la présente invention est de conception similaire à celle de la pile de la figure 4.

Il est bien entendu que les saillies ou les creux au sein d'une même face peuvent ne pas avoir les mêmes dimensions.

## Revendications

1. Plaque d'électrolyte pour système électrochimique en matériau céramique comportant une première (4) et une deuxième face (6) opposées de plus grandes surfaces, les deux faces (6, 4) étant séparées par une distance donnée (e), la première face (4) comportant des saillies linéaires (8) et la deuxième face (6) comportant des creux linéaires (10), les saillies (8) et les creux (10) étant parallèles entre eux, chaque saillie (8) étant superposée à un creux (10) selon une direction orthogonale à un plan moyen (P) de la plaque (2), la distance séparant un fond (10.1) de chaque creux (10) d'un sommet (8.1) de la saillie (8) superposée étant égale à la distance (e) entre la première (4) et la deuxième (6) face de sorte que la plaque d'électrolyte présente une épaisseur sensiblement constante, ladite épaisseur sensiblement constante présentant des variations n'excédant pas 10% de l'épaisseur moyenne de la plaque d'électrolyte **caractérisé en ce que** la profondeur des creux et la hauteur des saillies sont inférieures ou égales à la distance (e) entre la première et la deuxième face.

2. Plaque d'électrolyte selon la revendication 1, dans laquelle la hauteur (H1) des saillies (8), la profondeur (P1) des creux (10) et la distance (e) entre la première (4) et la deuxième (6) face de la plaque sont égales.

3. Plaque d'électrolyte selon la revendication 1 ou 2, dans laquelle les saillies (8) et les creux (10) ont des sections transversales de formes identiques, par exemple en forme de trapèze isocèle, et présentant des dimensions égales.

4. Plaque d'électrolyte selon la revendication 3, dans laquelle les saillies (8) et les creux (10) ont des sections transversales de formes identiques, en forme de trapèze isocèle, et présentant des dimensions égales.

5. Plaque d'électrolyte selon l'une des revendications 1 à 4, ayant une épaisseur (e) comprise entre 25 µm et 2 mm, et dans laquelle les saillies (8) présentent une hauteur (H1) comprise entre 5 µm et 1,5 mm, et les creux (10) présentent une profondeur (P1) comprise entre 5 µm et 1,5 mm.

6. Plaque d'électrolyte selon la revendication 5, ayant une épaisseur (e) égale à 200 µm.

7. Plaque d'électrolyte selon la revendication 6, dans laquelle les saillies (8) présentent une hauteur (H1) égale à 200 µm.

8. Plaque d'électrolyte selon la revendication 7, dans laquelle les creux (10) présentent une profondeur (P1) égale à 200 µm.

9. Système électrochimique comportant au moins une cellule comprenant une plaque d'électrolyte selon l'une des revendications précédentes, une cathode (16) sur l'une parmi la première (4) et la deuxième (6) face et une anode (16) sur l'autre de ses faces.

10. Système électrochimique comportant une pluralité de cellules (C1, C2) selon la revendication 9 connectées en série par des plaques interconnectrices (18) disposées entre une anode d'une cellule et une cathode d'une cellule adjacente.

11. Système électrochimique selon la revendication précédente étant une pile à combustible, par exemple haute température, de type SOFC.

12. Système électrochimique selon la revendication précédente étant une pile à combustible à haute température de type SOFC.

13. Système électrochimique selon la revendication 9 étant un électrolyseur, par exemple haute température.

14. Système électrochimique selon la revendication 13 étant un électrolyseur haute température.

15. Procédé de fabrication d'une plaque selon l'une des revendications 1 à 8 comportant :
- l'étape de coulage en bande,
- l'étape de réalisation des motifs sur la première et la deuxième face de la plaque, au moyen d'un dispositif laser dans une plaque,
- l'étape de frittage de la plaque,
- l'étape de réalisation des électrodes,
- l'étape de frittage des électrodes.

## Claims

1. An electrolyte plate for an electrochemical system un ceramic material, comprising a first (4) and a second face (6) opposite to each other of larger surface areas, both faces (6, 4) being separated by a given distance (e), the first face (4) comprising linear protrusions (8) and the second face (6) comprising linear recesses (10), the protrusions (8) and the recesses (10) being parallel to each other, each protrusion (8) being superposed to a recess (10) along a direction orthogonal to a mean plane (P) of the plate (2), the distance separating a bottom (10.1) of each recess (10) from a vertex (8.1) of the superposed protrusion (8) being substantially equal to the distance (e) between the first (4) and the second (6) face so that the electrolyte plate has substantially constant thickness, said substantially constant thickness having a thickness changes that do not exceed 10% of the average thickness of the electrolyte plate, **characterized in that** the depth of the recesses and the height of the protrusions are less than or equal to the distance between (e) between the first and the second face.

2. The electrolyte plate according to claim 1, wherein the height (H1) of the protrusions (8), the depth (P1) of the recesses (10) and the distance (e) between the first (4) and the second (6) face of the plate are equal.

3. The electrolyte plate according to claim 1 or 2, wherein the protrusions (8) and the recesses (10) have cross-sections with identical shapes, for example in the form of an isosceles trapezium, and having substantially equal dimensions.

4. The electrolyte plate according to claim 3, wherein the protrusions (8) and the recesses (10) have cross-sections with identical shapes, in the form of an isosceles trapezium, and having substantially equal dimensions.

5. The electrolyte according to any of claims 1 to 4, having a thickness (e) comprised between 25 µm and 2 mm, and wherein the protrusions (8) have a height (H1) comprised between 5 µm and 1.5 mm, advantageously equal to 200 µm, and the recesses (10) have a depth (P1) comprised between 5 µm and 1.5 mm, advantageously equal to 200 µm.

6. The electrolyte according to claim 5, having a thickness (e) equal to 200 µm.

7. The electrolyte according to claim 6, wherein the protrusions (8) have a height (H1) equal to 200 µm.

8. The electrolyte according to claim 7 wherein the recesses (10) have a depth (P1) equal to 200 µm.

9. An electrochemical system comprising at least one cell comprising an electrolyte plate according to one of the preceding claims, a cathode (16) on one among the first (4) and second (6) faces and an anode (16) on the other one of its faces.

10. An electrochemical system comprising a plurality of cells (C1, C2) according to claim 9 connected in series through interconnecting plates (18) positioned between an anode of a cell and a cathode of an adjacent cell.

11. The electrochemical system according to the preceding claim being a fuel cell, for example a high temperature fuel cell of the SOFC type.

12. The electrochemical system according to the preceding claim being a high temperature fuel cell of the SOFC type.

13. The electrochemical system according to claim 9 being an electrolyzer, for example a high temperature electrolyzer.

14. The electrochemical system according to claim 13 being a high temperature electrolyzer.

15. A method for manufacturing a plate according to one of claims 1 to 8 comprising:
- the step for strip casting,
- the step for producing patterns on the first and the second face of the plate, by means of a laser device in a plate,
- the step for sintering the plate,
- the step for making the electrodes,
- the step for sintering the electrodes.

## Patentansprüche

1. Elektrolytplatte für ein elektrochemisches System aus keramischem Material, die eine erste (4) und eine zweite Seite (6), die einander gegenüberliegen, mit größeren Oberflächen aufweist, wobei die beiden Seiten (6, 4) durch einen gegebenen Abstand (e) getrennt sind, wobei die erste Seite (4) geradlinige Vorsprünge (8) aufweist und die zweite Seite (6) geradlinige Vertiefungen (10) aufweist, wobei die Vorsprünge (8) und die Vertiefungen (10) zueinander parallel sind, wobei jeder Vorsprung (8) in einer zu einer Mittelebene (P) der Platte (2) orthogonalen Richtung über einer Vertiefung (10) angeordnet ist, wobei der Abstand, der einen Boden (10.1) jeder Vertiefung (10) von einem Scheitel (8.1) des darüber angeordneten Vorsprungs (8) trennt, gleich dem Abstand (e) zwischen der ersten (4) und der zweiten (6) Seite ist, derart, dass die Elektrolytplatte eine im Wesentlichen konstante Dicke aufweist, wobei die im Wesentlichen konstante Dicke Schwankungen aufweist, die 10 % der mittleren Dicke der Elektrolytplatte nicht übersteigen, **dadurch gekennzeichnet, dass** die Tiefe der Vertiefungen und die Höhe der Vorsprünge kleiner als der oder gleich dem Abstand (e) zwischen der ersten und der zweiten Seite sind.

2. Elektrolytplatte nach Anspruch 1, wobei die Höhe (H1) der Vorsprünge (8), die Tiefe (P1) der Vertiefungen (10) und der Abstand (e) zwischen der ersten (4) und der zweiten (6) Seite der Platte gleich sind.

3. Elektrolytplatte nach Anspruch 1 oder 2, wobei die Vorsprünge (8) und die Vertiefungen (10) Querschnitte mit identischen Formen haben, zum Beispiel von der Form eines gleichschenkligen Trapezes, und gleiche Abmessungen aufweisen.

4. Elektrolytplatte nach Anspruch 3, wobei die Vorsprünge (8) und die Vertiefungen (10) Querschnitte mit identischen Formen haben, von der Form eines gleichschenkligen Trapezes, und gleiche Abmessungen aufweisen.

5. Elektrolytplatte nach einem der Ansprüche 1 bis 4, die eine Dicke (e) zwischen 25 µm und 2 mm aufweist, und wobei die Vorsprünge (8) eine Höhe (H1) zwischen 5 µm und 1,5 mm aufweisen und die Vertiefungen (10) eine Tiefe (P1) zwischen 5 µm und 1,5 mm aufweisen.

6. Elektrolytplatte nach Anspruch 5, die eine Dicke (e) von 200 µm aufweist.

7. Elektrolytplatte nach Anspruch 6, wobei die Vorsprünge (8) eine Höhe (H1) von 200 µm aufweisen.

8. Elektrolytplatte nach Anspruch 7, wobei die Vertiefungen (10) eine Tiefe (P1) von 200 µm aufweisen.

9. Elektrochemisches System, das mindestens eine Zelle aufweist, die eine Elektrolytplatte nach einem der vorhergehenden Absprüche, eine Kathode (16) auf einer von der ersten (4) und der zweiten (6) Seite und eine Anode (16) auf der anderen von ihren Seiten umfasst.

10. Elektrochemisches System, das mehrere Zellen (C1, C2) nach Anspruch 9 aufweist, die durch Zwischenverbindungsplatten (18), die zwischen einer Anode einer Zelle und einer Kathode einer benachbarten Zelle angeordnet sind, in Reihe geschaltet sind.

11. Elektrochemisches System nach dem vorhergehenden Anspruch, welches eine Brennstoffzelle, zum Beispiel eine Hochtemperatur-Brennstotfizeffe, vom Typ SOFC ist.

12. Elektrochemisches System nach dem vorhergehenden Anspruch, welches eine Hochtemperatur-Brennstoffzelle vom Typ SOFC ist.

13. Elektrochemisches System nach Anspruch 9, welches ein Elektrolyseur, zum Beispiel ein Hochtemperatur-Elektralyseur ist.

14. Elektrochemisches System nach Anspruch 13, welches ein Hochtemperatur-Elektrolyseur ist.

15. Verfahren zur Herstellung einer Platte nach einem der Ansprüche 1 bis 8, welches aufweist:
- den Schritt des Bandgießens,
- den Schritt der Herstellung der Motive auf der ersten und der zweiten Seite der Platte mittels einer Laservorrichtung in einer Platte,
- den Schritt der Sinterung der Platte,
- den Schritt der Herstellung der Elektroden,
- den Schritt der Sinterung der Elektroden.
